# EUROPEAN PATENT APPLICATION

(11) **EP 4 324 548 A1**
(43) Date of publication of application: **21.02.2024**
(21) Application number: 23184057.0
(22) Date of filing: 07.07.2023
(51) Int. Cl.: B01D 53/32, G01N 1/22

(54) **CARBON DIOXIDE RECOVERY SYSTEM**

(30) Priority: 12.07.2022 JP 2022112029
(71) Applicant: DENSO CORPORATION, Aichi-pref. 448-8661 (JP)
(72) Inventor: AOSHIMA, Hiroki, Kariya-city, Aichi-pref.,, 448-8661 (JP); NAKAMURA, Yousuke, Kariya-city, Aichi-pref.,, 448-8661 (JP); TAKIKAWA, Hiroyuki, Kariya-city, Aichi-pref.,, 448-8661 (JP)
(74) Representative: Winter, Brandl - Partnerschaft mbB

(57) **Abstract**

A carbon dioxide recovery system capable of effectively suppressing deterioration of the carbon dioxide adsorption performance of an electrochemical cell is provided. The carbon dioxide recovery system (10) includes a control unit which is configured to perform as an information acquisition unit (S200, S220, S300, S310). The information acquisition unit acquires information about a substance contained in the atmosphere that may adhere to an electrochemical cell (12a). Then, the control device 17 is configured to switch between execution and non-execution of at least carbon dioxide recovery control based on the information acquired by the information acquisition unit.

## Description

### [TECHNICAL FIELD]

The present disclosure relates to a carbon dioxide recovery system that recovers carbon dioxide from the atmosphere containing carbon dioxide.

### [BACKGROUND]

Patent Literature 1 proposes a gas separation system that separates carbon dioxide from a mixed gas containing carbon dioxide by an electrochemical reaction. In this gas separation system, the mixed gas containing carbon dioxide is introduced into a housing in which an electrochemical cell is disposed. In a charge mode in which electrons are directed to the negative electrode of the electrochemical cell, an electroactive material provided on the negative electrode is reduced. Therefore, the electroactive material on the negative electrode is bonded to the carbon dioxide, and the carbon dioxide is separated from the mixed gas. On the other hand, in a discharge mode in which an electron flow is generated in a direction opposite to that in the charge mode, the electroactive material on the negative electrode is oxidized. As a result, the carbon dioxide is released from the electroactive material on the negative electrode.

### [PRIOR ART LITERATURE]

### [PATENT LITERATURE]

[PATENT LITERATURE 1] JP2018-533470A

### [SUMMARY OF THE INVENTION]

### [PROBLEM TO BE SOLVED BY THE INVENTION]

In the electrochemical cell as described above, as an electroactive material repeatedly binds carbon dioxide and releases the bound carbon dioxide, an amount of carbon dioxide bound to the electroactive material decreases. That is, repeated use deteriorates carbon dioxide adsorption performance of the electrochemical cell. The electrochemical cell whose carbon dioxide adsorption performance has deteriorated requires maintenance such as cleaning and replacement. For this reason, if the deterioration of the carbon dioxide adsorption performance of the electrochemical cell can be suppressed and the maintenance period can be extended, this would be of great benefit to the user.

### [SOLUTION TO PROBLEM]

The present disclosure is made in view of above points, and it is an object to provide a carbon dioxide recovery system capable of effectively suppressing deterioration of carbon dioxide adsorption performance of an electrochemical cell.

In order to achieve the above objectives, a carbon dioxide recovery system according to the present disclosure is
a carbon dioxide recovery system which recovers carbon dioxide from the atmosphere by an electrochemical reaction, the system comprising:
an electrochemical cell (12a), disposed within a housing, which adsorbs carbon dioxide and desorbs adsorbed carbon dioxide in response to an applied electrical potential;
a collector unit which recovers carbon dioxide desorbed from the electrochemical cell; and
a control unit configured to control the electrochemical cell and the collector unit to perform: applying an adsorption potential to the electrochemical cell to adsorb carbon dioxide contained in the atmosphere introduced into the housing to the electrochemical cell; applying a desorption potential to the electrochemical cell to desorb carbon dioxide from the electrochemical cell; and acquiring information about substances contained in the atmosphere that may adhere to the electrochemical cell, wherein
the control unit is configured to switch, at least, between execution and non-execution of carbon dioxide recovery control based on the information acquired by the acquiring step.

Then, the control unit is configured to switch, at least, between execution and non-execution of carbon dioxide recovery control based on the information acquired by the information acquisition unit.

Adhering substances contained in the atmosphere, such as salt, yellow sand, and fine particulate matter (for example, PM2.5) on the electrochemical cell is considered as one of the factors that accelerate the deterioration of the carbon dioxide adsorption performance of the electrochemical cell, for example. If such a substance adheres to the electrochemical cell, the carbon dioxide adsorption area of the adsorbent decreases. For this reason, the deterioration of the carbon dioxide adsorption performance of the electrochemical cell is accelerated. Conversely, if adhesion of such substances to the electrochemical cell may be suppressed, deterioration of the carbon dioxide adsorption performance of the electrochemical cell may be suppressed. Therefore, the carbon dioxide recovery system according to the present disclosure includes an information acquisition unit which acquires information about substances contained in the atmosphere that may adhere to the electrochemical cell. The control unit is configured to perform acquiring information about substances contained in the atmosphere that may adhere to the electrochemical cell. Then, the control unit is configured to switch, at least, between execution and non-execution of at least carbon dioxide recovery control based on the information acquired by the information acquisition unit. In this way, by configuring it to acquire information about substances that may adhere to the electrochemical cell and switch whether or not to execute control process for recovering carbon dioxide in accordance with the acquired information, it is possible to avoid execution of the control for carbon dioxide recovery in situations where the chemical cell may be contaminated with material. As a result, it is possible to suppress the adhesion of substances to the electrochemical cell and suppress the deterioration of the carbon dioxide adsorption performance of the electrochemical cell.

In order to facilitate the understanding of the present disclosure, the reference symbols or numerals in parentheses in "Claims" are merely added as examples of correspondence relationships with concrete structures in the embodiments described below, so that limiting the claim scope is not intended.

Technical features described in "Claims" other than the above-mentioned features become apparent from the description of the embodiments and the accompanying drawings.

### [BRIEF DESCRIPTION OF DRAWINGS]

FIG. 1 is a diagram showing a configuration of a carbon dioxide recovery system according to an embodiment.
FIG. 2 is a flowchart showing a process in a control device to perform a series of control sequence for carbon dioxide recovery process.
FIG. 3A is an explanatory diagram for explaining an adsorption mode included in the series of control sequence.
FIG. 3B is an explanatory diagram for explaining a scavenging mode included in the series of control sequence.
FIG. 3C is an explanatory diagram for explaining a desorption/recovery mode included in the series of control sequence.
FIG. 4 is a flow chart showing salt damage suppression process for suppressing adhesion of salt contained in the atmosphere to an electrochemical cell.
FIG. 5 is a diagram showing a flow of air if a direction of introduction of the air into the collector is reversed by rotating the blower fan of the blower in the opposite direction.
FIG. 6 is a flowchart showing a fine particle adhesion suppression processing for suppressing adhesion of fine particles such as the yellow sand and the fine particulate matter contained in the atmosphere to an electrochemical cell.

### [DETAILED DESCRIPTION]

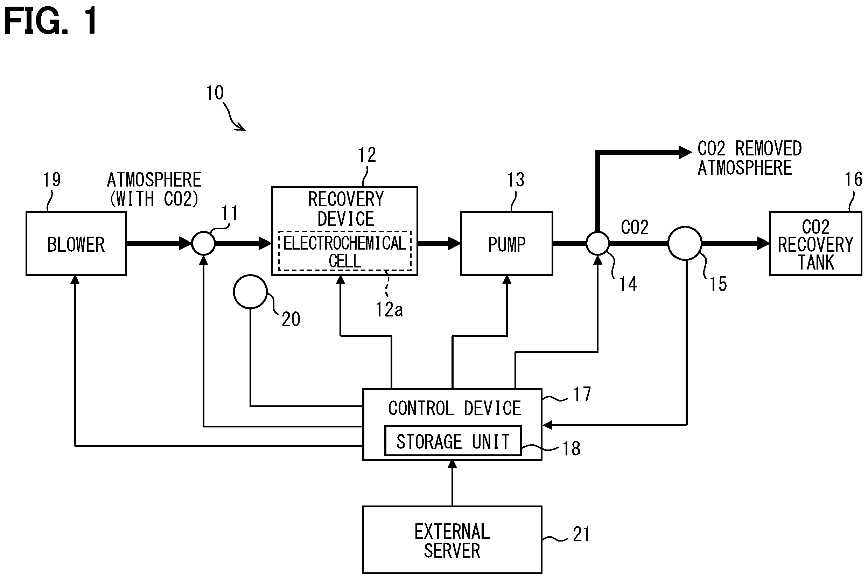

Hereinafter, a carbon dioxide recovery system according to an embodiment of the present disclosure will be described in detail with reference to the drawings. In the drawings, the same or equivalent portions are denoted by the same reference numerals. The carbon dioxide recovery system according to this embodiment recovers carbon dioxide from the atmosphere containing carbon dioxide. The atmosphere from which carbon dioxide has been removed is discharged to the outside. FIG. 1 shows a configuration of a carbon dioxide recovery system 10 according to the present embodiment.

The carbon dioxide recovery system 10 shown in FIG. 1 includes a channel on-off valve 11, a collector device 12, a pump 13, a channel switching valve 14, a CO2 sensor 15, a CO2 recovery tank 16, a control device 17, and a blower 19. In the drawings and the specification, carbon dioxide may be referred to as "CO2" or "CO2". The CO2 recovery tank 16 corresponds to a carbon dioxide recovery tank.

On-off state of the channel on-off valve 11 is controlled by the control device 17. If the channel on-off valve 11 is opened, the atmosphere containing carbon dioxide can be introduced into the collector device 12 through a channel pipe communicating the atmosphere and the inside of the collector device 12. On the other hand, if the channel on-off valve 11 is closed, the channel pipe communicating the atmosphere and the inside of the collector device 12 is blocked, and the collector device 12 is sealed. As a result, it becomes impossible for the atmosphere to enter the collector device 12 through a channel pipe provided with the channel on-off valve 11.

The air blower 19 has a blower fan rotated by a motor, although illustration is omitted. The blower fan of the blower 19 is rotationally driven by the control device 17 if the channel on-off valve 11 is open. As a result, the atmosphere containing carbon dioxide is sent into the collector device 12 via the channel pipe that communicates the atmosphere with an inside of the collector device 12. However, the blower 19 may be omitted. Alternatively, the blower fan of the blower 19 may be configured to be rotatable in both forward and reverse directions by the control device 17. If the blower fan is driven to rotate in the forward direction, the atmosphere is sent into the collector 12 through the channel pipe provided with the channel on-off valve 11. On the other hand, if the blower fan is driven to rotate in an opposite direction, the atmosphere is taken into the collector device 12 via a channel pipe for releasing the atmosphere from which carbon dioxide has been desorbed, which will be described later, and the atmosphere from which the carbon dioxide has been removed is released to the outside through the channel pipe provided with the channel on-off valve 11.

The collector device 12 includes an electrochemical cell 12a disposed inside a housing made of, for example, a metal. The electrochemical cell 12a can adsorb carbon dioxide by an electrochemical reaction to separate the carbon dioxide from the atmosphere, and desorb the adsorbed carbon dioxide to accumulate the desorbed carbon dioxide in the CO2 recovery tank 16 by the pump 13. The collector device 12 has two openings. One of the openings is an introduction port for introducing the atmosphere containing carbon dioxide into the housing of the collector device 12 from the outside. The other of the openings is a discharge port for discharging the atmosphere from which the carbon dioxide has been removed or the carbon dioxide desorbed from the electrochemical cell 12a. The channel pipe provided with the channel on-off valve 11 described above is connected to an inlet, and the channel pipe provided with the pump 13 is connected to an outlet. Note that the inside of the collector device 12 is the same as the inside of the housing.

A plurality of electrochemical cells 12a are stacked and disposed in the housing of the collector device 12. A stacking direction of the plurality of electrochemical cells 12a is a direction orthogonal to a flow direction of the atmosphere. Each electrochemical cell 12a is formed in a plate shape, and is disposed such that a plate surface intersects with the stacking direction of the cells. A predetermined gap is provided between the adjacent electrochemical cells 12a. A gap provided between the adjacent electrochemical cells 12a serves as a channel through which the atmosphere flows. Each electrochemical cell 12a is configured by stacking, for example, a working electrode current collecting layer, a working electrode, a separator, a counter electrode, a counter electrode current collecting layer, and the like in the described order. The working electrode is a negative electrode, and the counter electrode paired with the working electrode is a positive electrode. By changing a potential difference to be applied between the working electrode and the counter electrode, electrons can be provided to the working electrode so that a carbon dioxide adsorbent of the working electrode is caused to adsorb carbon dioxide, or electrons can be released from the working electrode so that the carbon dioxide adsorbent is caused to desorb the adsorbed carbon dioxide. That is, by applying an adsorption potential between the working electrode and the counter electrode of the electrochemical cell 12a, carbon dioxide can be adsorbed on the electrochemical cell 12a (on a carbon dioxide adsorbent of the working electrode). The carbon dioxide can be desorbed from the electrochemical cell 12a by applying a desorption potential different from the adsorption potential between the working electrode and the counter electrode of the electrochemical cell 12a.

The working electrode current collecting layer is made of a porous conductive material having pores through which the atmosphere containing carbon dioxide can pass. The working electrode current collecting layer only needs to have gas permeability and conductivity, and as a material for form ing the working electrode current collecting layer, for example, a metal material or a carbonaceous material can be used.

The working electrode is formed of a material obtained by mixing the carbon dioxide adsorbent, a conductive substance, a binder, and the like. The carbon dioxide adsorbent has a property of adsorbing carbon dioxide by receiving electrons and desorbing the adsorbed carbon dioxide by releasing electrons. As the carbon dioxide adsorbent, for example, polyanthraquinone can be used. The conductive substance forms a conductive path to the carbon dioxide adsorbent. As the conductive substance, for example, a carbon material, such as a carbon nanotube, carbon black, or graphene, can be used. The binder is for holding the carbon dioxide adsorbent and the conductive substance. As the binder, for example, a conductive resin can be used. The conductive resin may be, for example, an epoxy resin or a fluoropolymer, containing Ag or the like as a conductive filler. The fluoropolymer may be, for example, polytetrafluoroethylene (PTFE), or polyvinylidene fluoride (PVDF).

The counter electrode is formed of a material obtained by mixing an electroactive auxiliary material, a conductive substance, a binder, and the like. Since the conductive substance and the binder of the counter electrode are similar to the conductive substance and the binder of the working electrode, description thereof is omitted. The electroactive auxiliary material of the counter electrode is made of a material having an active substance serving as an electron donor. The electroactive auxiliary material of the counter electrode is an auxiliary electroactive species that exchanges electrons with the carbon dioxide adsorbent of the working electrode. As the electroactive auxiliary material, for example, a metal complex capable of exchanging electrons by changing the valence of a metal ion can be used. Examples of such metal complex include cyclopentadienyl metal complexes such as ferrocene, nickelocene and cobaltocene, and porphyrin metal complexes. Each of these metal complexes may be a polymer or a monomer. Similarly to the working electrode current collecting layer, the counter electrode current collecting layer is formed of a conductive material such as a metal material or a carbonaceous material.

The separator is disposed between the working electrode and the counter electrode to separate the working electrode and the counter electrode. The separator is an insulating ion permeable membrane that prevents physical contact between the working electrode and the counter electrode to suppress an electrical short circuit, and causes ions to pass therethrough. As the separator, a cellulose membrane, a polymer, a composite material of a polymer and a ceramic, or the like can be used.

In the electrochemical cell 12a, an electrolyte is provided across the working electrode and the counter electrode. As the electrolyte, for example, an ionic liquid can be used. The ionic liquid is salt of a liquid having non-volatility under normal temperature and pressure.

The pump 13 may suck a residual atmosphere left in the collector device 12 from the collector device 12 and discharge the atmosphere to the outside (i.e., scavenges the residual atmosphere in the collector device 12). And, if the carbon dioxide adsorbed by the carbon dioxide adsorbent is desorbed, the pump 13 may suck the desorbed carbon dioxide from the collector device 12 and discharge the carbon dioxide toward the CO2 recovery tank 16. If the pump 13 scavenges the residual atmosphere in the collector device 12, the channel on-off valve 11 blocks the channel pipe communicating the outside and the inside of the collector device 12. In other words, the channel on-off valve 11 is opened only during the adsorption mode in which the control device 17 executes control for recovering carbon dioxide and causes the electrochemical cell 12a (carbon dioxide adsorbent) to adsorb carbon dioxide. The channel on-off valve 11 is closed during in a scavenging mode in which the control device 17 executes control for scavenging residual atmosphere from an inside of the collector device 12. The channel on-off valve 11 is closed during in a desorption/recovery mode in which the control device 17 executes control for desorbing the adsorbed carbon dioxide from the electrochemical cell 12a and recovering the desorbed carbon dioxide to the CO2 recovery tank 16. Therefore, scavenging of the residual atmosphere in the collector device 12 is performed by vacuum drawing by the pump 13. In addition, a subsequent discharge of the carbon dioxide to the CO2 recovery tank 16 is also performed in a state closer to a vacuum than the atmosphere.

The channel switching valve 14 is a three-way valve which switches the channel of gas (atmosphere or carbon dioxide) flowing through the pipe on a downstream side of the pump 13. Switching the channel of the channel switching valve 14 is controlled by the control device 17. Specifically, if the atmosphere containing carbon dioxide is introduced into the collector device 12 or if the residual atmosphere in the collector device 12 is scavenged by the pump 13, the control device 17 controls the channel switching valve 14 such that the pipe on the downstream side of the pump 13 communicates with the outside (atmosphere). As a result, the atmosphere from which carbon dioxide has been removed and the residual atmosphere in the collector device 12 are released to the outside. On the other hand, if the pump 13 sucks the desorbed carbon dioxide from the collector device 12 and discharges the carbon dioxide in a state where the electrochemical cell 12a desorbs the adsorbed carbon dioxide, the control device 17 controls the channel switching valve 14 such that the pipe on the downstream side of the pump 13 communicates with a side to the CO2 recovery tank 16. As a result, the carbon dioxide recovered by the collector device 12 can be accumulated in the CO2 recovery tank 16.

The CO2 sensor 15 detects a concentration and a flow rate of the carbon dioxide flowing through the pipe connected to the CO2 recovery tank 16 at predetermined time intervals. The control device 17 may calculate (detect), from the carbon dioxide concentration and the flow rate detected by the CO2 sensor 15, a carbon dioxide recovery amount recovered in the CO2 recovery tank 16. The carbon dioxide recovery amount may be calculated by the CO2 sensor 15. In this case, the CO2 sensor 15 outputs the calculated carbon dioxide recovery amount to the control device 17.

The controller 17 includes a well-known microcontroller including a central processing unit (i.e., CPU), a read only memory (i.e., ROM), a random access memory (i.e., RAM) and the like, and peripheral devices thereof. The peripheral device includes a transmission/reception unit that communicates with an external server 21 and a storage unit 18 that has a storage medium. The storage unit 18 stores information about an installation location of the carbon dioxide recovery system 10 and a direction in which the opening of the channel pipe connected to an introduction hole of the collector device 12 is directed. In addition to the installation location of the carbon dioxide recovery system 10, the storage unit 18 may store information indicating that the carbon dioxide recovery system 10 is installed in a coastal area where there is a risk of a salt damage. Note that the installation location of the carbon dioxide recovery system 10 may be configured to be detected by, for example, a GPS receiver instead of being stored in the storage unit 18.

A wind direction and speed sensor 20 detects information about wind direction and speed in the vicinity of carbon dioxide recovery system 10. Information about the detected wind direction and speed is provided to the control device 17. The external server 21 provides the control device 17 with information about an amount of the yellow sand and/or the fine particulate matter (e.g., PM2.5) contained in the atmosphere in a geological area where the carbon dioxide recovery system 10 is installed. The external server 21 can acquire information about the amount of the yellow sand and/or the fine particulate matter (e.g., PM2.5) contained in the atmosphere from information published by the Ministry of the Environment or the Meteorological Agency, for example.

The control device 17 includes a well-known microcontroller including a central processing unit (i.e., CPU), a read only memory (i.e., ROM), a random access memory (i.e., RAM) and the like, and peripheral devices thereof. The peripheral devices include a storage unit 18 having a storage medium. This system or device has an electronic controller. The controller has at least one processor circuit. One example of a processor circuit is a processor circuit that executes a program which is an assembled instructions executable by a computer. The processor circuit may be so-called a microprocessor and may be provided as a chip. The controller includes a program and a non-transitory, tangible storage medium, e.g., a semi-conductor memory, for recording data. The processor circuit provides functions of the device according to this disclosure by executing a program. Another example of a processor circuit is a processor circuit including a plurality of logic circuits or analog circuits. A plurality of logic circuits or analog circuits are configured to provide a plurality of substantive elements and their electrical connections so as to provide functions of the apparatus according to this disclosure. The processor circuit may have various names such as accelerators, gate arrays, and FPGAs (Field-programmable gate arrays). The controller is also called a microcontroller or a microcomputer. The controller, having at least one processor circuit, is configured to perform as at least one unit, module, or section described in this disclosure.

The control device 17 performs various arithmetic processing on the basis of a control program stored in the storage medium such as a ROM, and controls operations of various control target devices such as the channel on-off valve 11, the collector device 12, the pump 13, the channel switching valve 14, and the blower 19. Furthermore, the control device 17 communicates with the external server 21 via the transmission/reception unit. The control device 17 switches whether or not to execute control process for recovering carbon dioxide based on information stored in the storage unit 18, information detected by the wind direction and speed sensor 20, and information acquired through communication with the external server 21. Information stored in the storage unit 18, information detected by the wind direction and speed sensor 20, and information acquired through communication with the external server 21 correspond to information acquired by the information acquisition unit.

The control device 17 of the present embodiment controls operations of various control target devices so as to executes a series of a control sequence for carbon dioxide recovery, including at least an adsorption mode, a scavenging mode, and a desorption/recovery mode, in the carbon dioxide recovery system 10. The desorption/recovery mode indicates that a desorption mode and a recovery mode are defined as one mode.

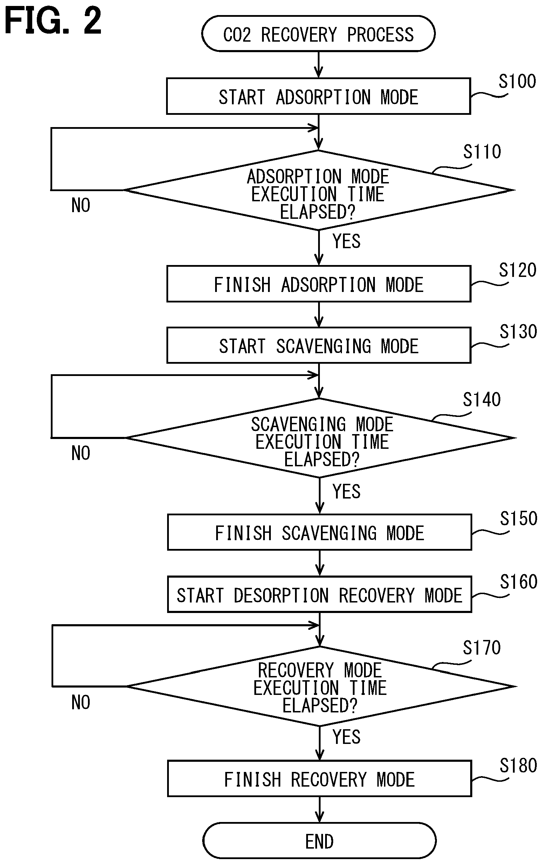

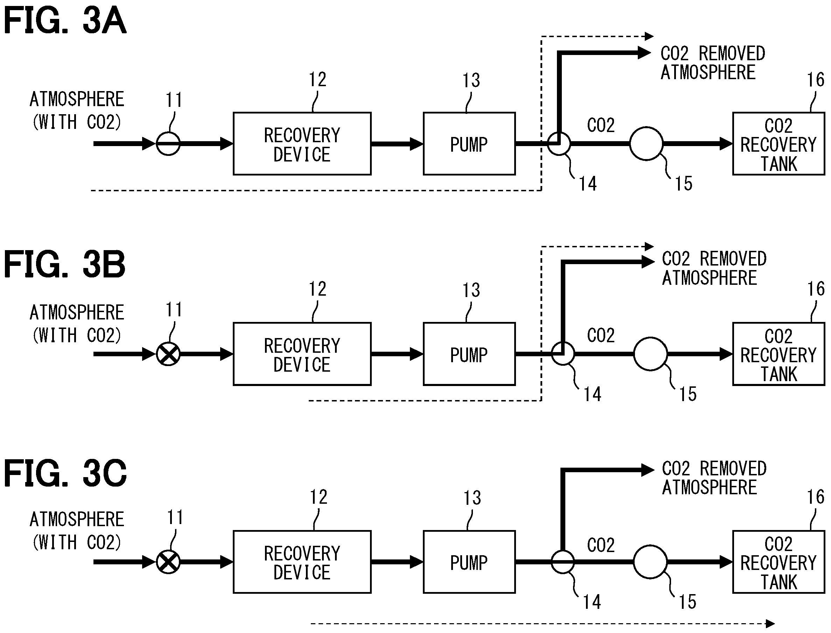

Hereinafter, the series of control sequences for carbon dioxide recovery, including at least an adsorption mode, a scavenging mode, and a desorption/recovery mode, that is executed in the carbon dioxide recovery system 10 will be described. FIG. 2 is a flowchart showing a process performed in the control device 17 to execute the control sequences. FIG. 3A is an explanatory diagram for explaining an adsorption mode included in the series of control sequence. FIG. 3B is an explanatory diagram for explaining a scavenging mode included in the series of control sequence. FIG. 3C is an explanatory diagram for explaining a desorption/recovery mode included in the series of control sequence.

As shown in the flowchart of FIG. 2, the control device 17 first starts, in a step S100, the adsorption mode which is a first operation mode of the series of control sequences. In this adsorption mode, the channel on-off valve 11 is opened such that the atmosphere containing carbon dioxide can be introduced into the collector device 12, as shown in FIG. 3. If the blower 19 is provided, the blower 19 is driven at a predetermined constant rotational speed so that a predetermined amount of the atmosphere is introduced into the collector device 12.

In the adsorption mode, an adsorption potential is applied between the working electrode and the counter electrode of the electrochemical cell 12a of the collector device 12 so that the carbon dioxide adsorbent of the working electrode can adsorb carbon dioxide. This adsorption potential is a predetermined constant potential. Furthermore, in the adsorption mode, the channel switching valve 14 is controlled such that the pipe on the downstream side of the pump 13 communicates with the outside, as shown in FIG. 3A.

By such control of the channel on-off valve 11, the electrochemical cell 12a of the collector device 12, the channel switching valve 14, and the like, the atmosphere containing carbon dioxide passes through the channel on-off valve 11 and enters the collector device 12 in the adsorption mode, as shown by a dotted arrow in FIG. 3A. The carbon dioxide contained in the atmosphere entering the collector device 12 is adsorbed by the plurality of electrochemical cells 12a. As a result, carbon dioxide is removed from the atmosphere. The atmosphere, from which the carbon dioxide has been removed, passes through the pump 13, is guided to a channel pipe leading toward the outside at the channel switching valve 14, and is discharged to the outside through the channel pipe.

In a step S110 in the flowchart of FIG. 2, the control device 17 determines whether the adsorption mode execution time has elapsed. This adsorption mode execution time is set by the control device 17. In the step S110, it is determined whether the set adsorption mode execution time has elapsed.

If it is determined in the determination processing in the step S110 that the set adsorption mode execution time has elapsed, the process proceeds to a step S120. On the other hand, if it is determined that the set adsorption mode execution time has not elapsed, the determination processing in the step S110 is repeatedly executed until the adsorption mode execution time elapses.

In the step S120, adsorption mode end processing is executed. Specifically, the control device 17 closes the channel on-off valve 11 to block the atmosphere that flows into the collector device 12 from the outside. If the system has the blower 19, the control device 17 stops the activation of the blower 19. The control device 17 also resets a count value of a counter that counts the adsorption mode execution time, and the like. In a step S130, the control device 17 starts the scavenging mode that is the second operation mode of the series of control sequences. In this scavenging mode, the channel on-off valve 11 remains closed, as shown in FIG. 3B. The adsorption potential applied between the working electrode and the counter electrode of the electrochemical cell 12a of the collector device 12 is maintained as it is. The communication between the pipe on the downstream side of the pump 13 and the outside by the channel switching valve 14 is also maintained.

In the scavenging mode, driving of the pump 13 is started. As described above, the channel on-off valve 11 is closed, so that the collector device 12 is in a sealed state on the upstream side of the pump 13. When the pump 13 is activated in this state, the residual atmosphere left in the sealed collector device 12, from which the carbon dioxide has been removed, is sucked from the inside of the collector device 12 and discharged to the outside. As a result, the residual atmosphere in the collector device 12 can be scavenged. Since the collector device 12 on the upstream side of the pump 13 is sealed, the scavenging of the residual atmosphere in the collector device 12 is performed by evacuation by the pump 13.

By such control of the channel on-off valve 11, the electrochemical cell 12a of the collector device 12, the pump 13, and the channel switching valve 14 in the scavenging mode, the residual atmosphere in the collector device 12, from which the carbon dioxide has been removed, passes through the pump 13, is guided to the channel pipe leading toward the outside at the channel switching valve 14, and is discharged to the outside through the channel pipe, as shown by a dotted arrow in FIG. 3B.

In a step S140 in the flowchart of FIG. 2, the control device 17 determines whether a scavenging mode execution time has elapsed. The scavenging mode execution time is predetermined to a time sufficient to scavenge the residual atmosphere in the collector device 12.

If it is determined in the determination processing in the step S140 that the predetermined scavenging mode execution time has elapsed, the process proceeds to a step S150. On the other hand, if it is determined that the set scavenging mode execution time has not elapsed, the determination processing in the step S140 is repeatedly executed until the scavenging mode execution time elapses. In the step S150, scavenging mode end processing is executed. Specifically, the control device 17 resets a count value of a counter that counts the scavenging mode execution time, and the like.

In a step S160, the control device 17 starts the desorption/recovery mode that is the third operation mode of the series of control sequences. In this desorption/recovery mode, the channel on-off valve 11 is maintained in a closed state, as shown in FIG. 3C. In addition, the pump 13 sucks the carbon dioxide desorbed from the adsorbent of the electrochemical cell 12a in a state closer to a vacuum than the atmosphere, so that the driving by the drive output equivalent to that in the scavenging mode is continued. On the other hand, a desorption potential, at which the carbon dioxide adsorbed by the carbon dioxide adsorbent of the working electrode can be desorbed by releasing electrons from the working electrode, is applied between the working electrode and the counter electrode of the electrochemical cell 12a of the recovery device 12. This desorption potential is a predetermined constant potential. Furthermore, in the desorption/recovery mode, the channel switching valve 14 is controlled to cause the pipe on the downstream side of the pump 13 to communicate with the CO2 recovery tank 16, as shown in FIG. 3C.

By such control of the channel on-off valve 11, the electrochemical cell 12a of the collector device 12, the pump 13, and the channel switching valve 14 in the desorption/recovery mode, the carbon dioxide desorbed from the absorbent of the electrochemical cell 12a passes through the pump 13, is guided to a channel pipe leading toward the CO2 recovery tank 16 at the channel switching valve 14, and is accumulated in the CO2 recovery tank 16 through the channel pipe, as shown by a dotted arrow in FIG. 3C. Therefore, the channel on-off valve 11, the collector device 12, the pump 13, the channel switching valve 14, and the CO2 recovery tank 16 correspond to a collector unit for recovering the carbon dioxide desorbed from the electrochemical cell 12a.

At this time, the concentration and the flow rate of the carbon dioxide flowing through the channel pipe toward the CO2 recovery tank 16 are detected by the CO2 sensor 15. The control device 17, based on the detection results by the CO2 sensor 15, can calculate a recovery amount of the carbon dioxide recovered in the CO2 recovery tank 16 by executing the series of control sequences. The concentration of the carbon dioxide flowing through the channel pipe toward the CO2 recovery tank 16 is usually close to 100%. Therefore, a sensor that can only detect the flow rate of the carbon dioxide may be used as the CO2 sensor 15.

The desorption/recovery mode may perform, does not perform the desorption and the recovery of the carbon dioxide simultaneously, the desorption of the carbon dioxide from the electrochemical cell 12a in a prior manner, and after a predetermined time has elapsed from the desorption of the carbon dioxide, then start the recovery of the desorbed carbon dioxide. That is, the execution time of the recovery mode may be shortened from the execution time of the desorption mode by separating the desorption mode and the recovery mode and delaying the execution start time of the recovery mode from the execution start time of the desorption mode. In this case, the driving of the pump 13 is temporarily stopped at the start of the desorption mode. Then, while the pump 13 is stopped, the desorption potential is applied between the working electrode and the counter electrode of the electrochemical cell 12a to desorb carbon dioxide from the carbon dioxide adsorbent of the working electrode. In a state where a predetermined time has elapsed from the start of the desorption mode and the desorption of the carbon dioxide has progressed to some extent, the recovery mode is started and the pump 13 is driven again. As a result, the pump 13 only needs to be driven in the recovery mode, so that the pump 13 can be efficiently driven. However, even in the recovery mode in which the pump 13 is driven, the desorption potential is applied between the working electrode and the counter electrode of the electrochemical cell 12a, and the desorption of the carbon dioxide from the electrochemical cell 12a is continued. That is, when the recovery mode is executed, the desorption mode is also continued, and the recovery mode and the desorption mode are executed simultaneously.

In a step S170 in the flowchart of FIG. 2, the control device 17 determines whether a desorption/recovery mode execution time or a recovery mode execution time (hereinafter, a recovery mode execution time is used as a word to include both of them) has elapsed. This recovery mode execution time is set by the control device 17. In the step S170, it is determined whether the set recovery mode execution time has elapsed. If it is determined in the determination processing in the step S170 that a set value of the recovery mode execution time has elapsed, the process proceeds to a step S180. On the other hand, if it is determined that the set value of the recovery mode execution time has not elapsed, the determination processing in the step S170 is repeatedly executed until the recovery mode execution time elapses.

In the step S180, a recovery mode end processing is executed. Specifically, the control device 17 opens the channel on-off valve 11 to cause the collector device 12 to communicate with the outside. However, the channel on-off valve 11 may be opened at the start of the adsorption mode and kept closed at the end of the recovery mode. The control device 17 stops the application of the desorption potential to the electrochemical cell 12a. The control device 17 stops the activation of the pump 13. The control device 17 switches the channel switching valve 14 to cause the channel pipe on the downstream side of the pump 13 to communicate with the outside. A communication of the channel pipe on the downstream side of the pump 13 to the outside may also be performed at the start of the adsorption mode. Furthermore, the control device 17 also resets a count value of a counter that counts the recovery mode execution time, and the like.

Here, the carbon dioxide adsorption performance of the electrochemical cell 12a described above deteriorates due to repeated use of the electrochemical cell 12a. The electrochemical cell 12a whose carbon dioxide adsorption performance has deteriorated requires maintenance such as cleaning and replacement. For this reason, if the deterioration of the carbon dioxide adsorption performance of the electrochemical cell 12a can be suppressed and the maintenance period can be extended, this would be of great benefit to the user.

Adhering substances contained in the atmosphere, such as salt, yellow sand, and fine particulate matter (for example, PM2.5) on the electrochemical cell 12a is considered as one of the factors that accelerate the deterioration of the carbon dioxide adsorption performance of the electrochemical cell 12a, for example. If such a substance adheres to the electrochemical cell 12a, the carbon dioxide adsorption area of the adsorbent decreases. For this reason, the deterioration of the carbon dioxide adsorption performance of the electrochemical cell 12a is accelerated. Conversely, if adhesion of such substances to the electrochemical cell 12a may be suppressed, deterioration of the carbon dioxide adsorption performance of the electrochemical cell 12a may be suppressed.

Therefore, the carbon dioxide recovery system 10 according to the present disclosure is configured to acquire information about substances such as salt, yellow sand, and fine particulate matter contained in the atmosphere, and, switch, at least, between executing or not executing control which recovers carbon dioxide based on the acquired information. Accordingly, in a situation where there is a high possibility that substances such as salt, yellow sand, and fine particulate matter adhere to the electrochemical cell 12a, the control device 17 is configured to avoid executing the control of recovering carbon dioxide. As a result, it is possible to suppress the adhesion of substances to the electrochemical cell 12a and suppress the deterioration of the carbon dioxide adsorption performance of the electrochemical cell 12a.

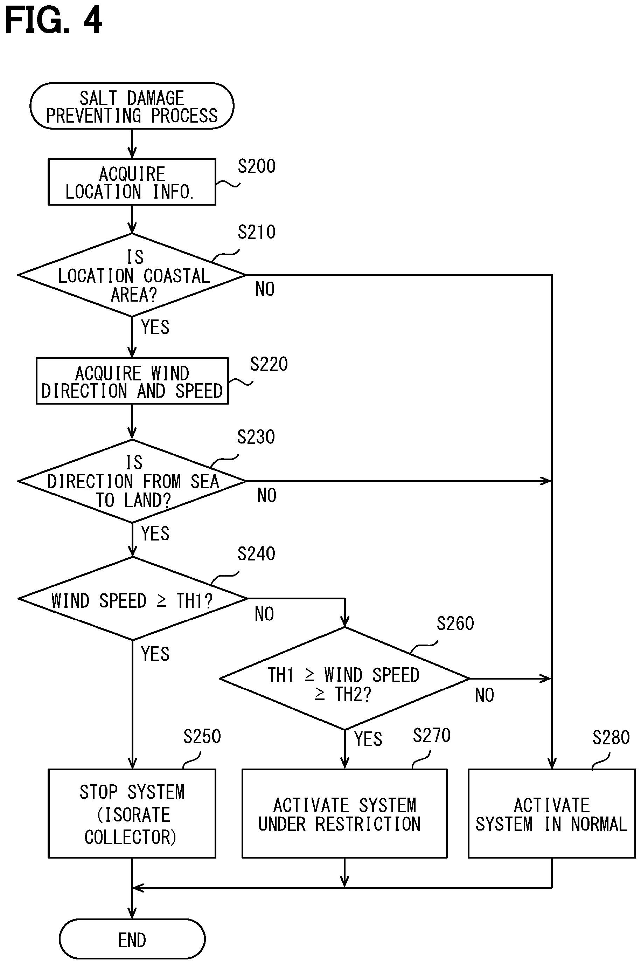

First, salt damage suppression processing for suppressing adhesion of salt contained in the atmosphere to the electrochemical cell 12a is described with reference to the flowchart of FIG. 4. The salt damage suppression process shown in the flowchart of FIG. 4 may be executed in a periodic manner and/or in a fixed time in response to a timing, such as a starting an activation of the carbon dioxide recovery system 10, before execution of the adsorption mode in the series of control sequence in the carbon dioxide recovery system 10, and during execution of the series of control sequence. First, the control device 17 acquires information regarding the installation location of the carbon dioxide recovery system 10 in a step S200. As described above, the control device 17 can acquire information about the installation location of the carbon dioxide recovery system 10 from the storage unit 18 or the GPS receiver.

In step S210, the control device 17 determines whether or not the installation location of the carbon dioxide recovery system 10 belongs to the coastal area. Information about the coastal area may be stored in advance by the control device 17 or may be acquired from the external server 21. If the storage unit 18 stores that the carbon dioxide recovery system 10 is installed in a coastal area where there is a risk of the salt damage, it is determined in the step S210 if information to that effect is stored. If it is determined that the carbon dioxide recovery system 10 is installed in the coastal area, the control device 17 proceeds to the process of a step S220. If it is determined that the carbon dioxide recovery system 10 is not installed in the coastal area, there is no need to suppress the salt damage, so the control device 17 proceeds to the process of a step S280.

In the step S220, the control device 17 acquires information about wind direction and wind speed from the wind direction and speed sensor 20. For example, the control device 17 may obtain information on the wind direction and wind speed by averaging the wind direction and wind speed over a predetermined period. Then, in a step S230, the control device 17 determines whether or not the wind direction is from the sea toward the land. In other words, it is determined whether or not the wind direction is a direction in which the atmosphere contains a large amount of salt. If it is determined in the step S230 that the wind direction is from the sea toward the land, the control device 17 proceeds to the process of a step S240. On the other hand, if it is determined that the wind direction is not from the sea to the land, the risk of salt damage is low, so the control device 17 proceeds to process of the step S280.

In the step S240, the control device 17 determines whether or not the wind speed is stronger than a first reference value TH1. If the wind speed is stronger than or equal to the first reference value TH1, seawater is blown up by the wind, and, as a result, the wind that blows against the carbon dioxide recovery system 10 may contain a lot of salt. Therefore, if it is determined in the step S240 that the wind speed is greater than or equal to the first reference value TH1, the control device 17 proceeds to process of a step S250. In the step S250, the control device 17 determines to stop the carbon dioxide recovery system 10 from active. As a result, the control device 17 stops executing the series of control sequences for carbon dioxide recovery described above. At this time, the control device 17 prevents the atmosphere containing salt from entering into the collector device 12 by substantially blocking an atmosphere introducing channel to the collector device 12 by closing the channel on-off valve 11 and/or turns the channel switch valve 14 in a state in which the pipe on the downstream side of the pump 13 and the CO2 recovery tank 16 are communicated with each other. On the other hand, if it is determined in the step S240 that the wind speed is less than the first reference value TH1, the control device 17 proceeds to process of the step S260. In the step S260, the control device 17 determines whether or not the wind speed is less than the first reference value TH1 and the wind is slightly stronger than a second reference value TH2. If the wind speed is less than the first reference value TH1 and the wind is slightly stronger than the second reference value TH2, the control device 17 proceeds to process of a step S270. In the step S270, the control device 17 determines to active the carbon dioxide recovery system 10 under a restricted condition. The above condition is that controlling an introducing direction of the atmosphere into the collector device 12 to a direction opposite to the direction of the wind from the sea to the land. As a result, it is possible to suppress the introduction of the atmosphere containing a large amount of salt into the collector device 12.

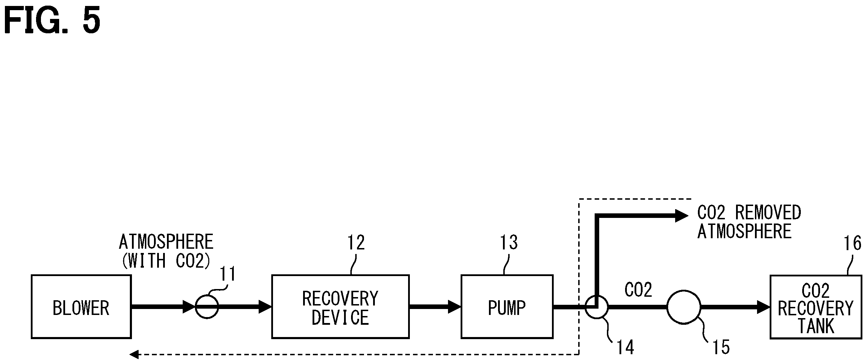

For example, if an opening of a channel pipe connected to an introducing hole of the collector device 12 is open toward the sea, the control device 17 executes the adsorption mode of the above-described series of control sequences while driving the blower fan of the blower 19 in an opposite rotational direction so that the atmosphere flows in a reversal direction as shown by the dotted line arrow shown in FIG. 5. As indicated, the atmosphere is taken in from an outlet primarily provided for releasing the atmosphere from which carbon dioxide has been removed, which is open toward the land. The atmosphere flows through an order from the channel switching valve 14, the pump 13, the collector device 12, the channel on-off valve 11, and the blower 19. As a result, the atmosphere is discharged to the outside from an opening primarily provided for introducing the atmosphere via the blower 19. Alternatively, if an opening of a channel pipe connected to an introducing hole of the collector device 12 is open toward the land, the control device 17 executes the adsorption mode while driving the blower fan of the blower 19 in a normal rotational direction so that the atmosphere flows in a normal direction as shown by the dotted arrow line in FIG. 3A. In this flow direction, the atmosphere is introduced from an opening which is primarily provided as an inlet. The introduced atmosphere flows in a direction from the blower 19, the channel on-off valve 11, the collector device 12, the pump 13, and the channel switching valve 14. Finally, the atmosphere is released from the outlet primarily provided for releasing the atmosphere from which carbon dioxide has been removed.

On the other hand, if it is determined that the wind speed is less than the first reference value TH1 and the wind is not slightly stronger than the second reference value TH2, i.e., the wind speed is less than the second reference value TH2 and the wind is weak, since the risk of salt damage is considered low, the control device 17 proceeds to process of a step S280. In the step S280, the control device 17 determines to activate the carbon dioxide recovery system 10 normally.

In this manner, the control device 17 determines whether the carbon dioxide recovery system 10 should be stopped, activated under a restriction, or activated normally in the salt damage suppression process. Therefore, in situations where there is a high probability that salt may adhere to the electrochemical cell 12a, the control device 17 is configured to avoid executing a series of control sequences for carbon dioxide recovery. Furthermore, even if the carbon dioxide recovery system 10 is activated and operated in a slightly strong wind, salt content can be prevented from being introduced into the recovery device 12 as much as possible. As a result, it is possible to suppress the adhesion of substances to the electrochemical cell 12a and suppress the deterioration of the carbon dioxide adsorption performance of the electrochemical cell 12a. In the case of a slightly strong wind, the operation of the carbon dioxide recovery system 10 may be stopped rather than activated under a restricted condition.

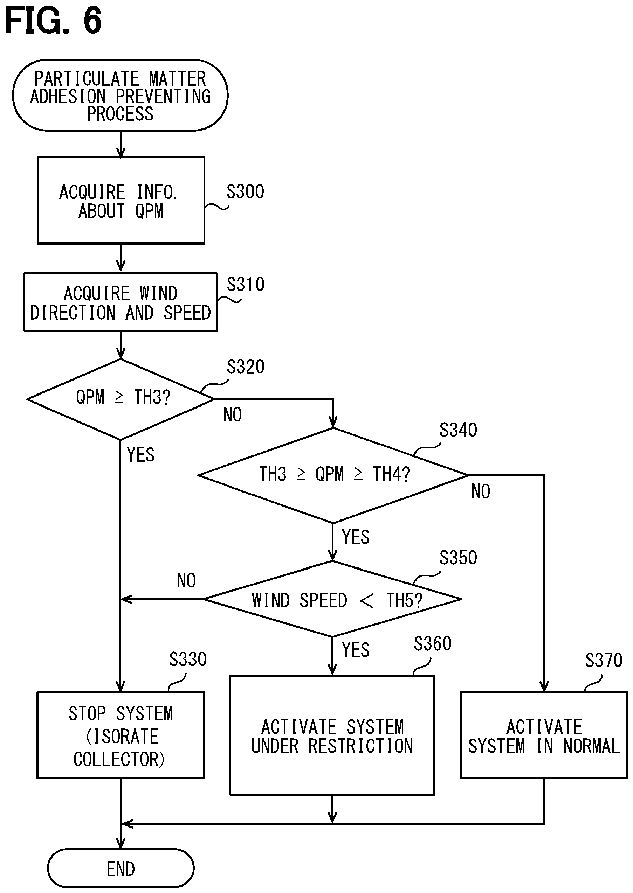

Next, a fine particle adhesion suppression process for suppressing adhesion of fine particles such as yellow sand and fine particulate matter (hereinafter referred to as PM2.5) contained in the atmosphere to the electrochemical cell 12a is described with reference to the flowchart of FIG. 6. The salt damage suppression process shown in the flowchart of FIG. 6 may be executed in a periodic manner and/or in a fixed time in response to a timing, such as a starting an activation of the carbon dioxide recovery system 10, before execution of the adsorption mode in the series of control sequence in the carbon dioxide recovery system 10, and during execution of the series of control sequence.

First, in a step S300, the control device 17 acquires information about an amount QPM of fine particles (yellow sand and/or PM2.5) contained in the atmosphere. As described above, the control device 17 can acquire information about the amount QPM of fine particles in the area where the carbon dioxide recovery system 10 is installed by communicating with the external server 21. In step a S310, the control device 17 acquires information about wind direction and wind speed from the wind direction and speed sensor 20.

Then, in the step S320, the control device 17 determines whether or not the amount QPM of particles contained in the atmosphere is equal to or greater than a third reference value TH3, i.e., a large amount of particles are contained in the atmosphere. If it is determined that the amount QPM of fine particles is equal to or greater than the third reference value TH3, the control device 17 proceeds to process of a step S330. In the step S330, the control device 17 determines to stop the carbon dioxide recovery system 10 from active. As a result, the control device 17 stops executing the series of control sequences for carbon dioxide recovery described above. At this time, the control device 17 prevents the atmosphere containing fine particles from entering into the collector device 12 by substantially blocking an atmosphere introducing channel to the collector device 12 by closing the channel on-off valve 11 and/or turns the channel switch valve 14 in a state in which the pipe on the downstream side of the pump 13 and the CO2 recovery tank 16 are communicated with each other.

On the other hand, if it is determined in the step S320 that the amount QPM of fine particles contained in the atmosphere is less than the third reference value TH3, the control device 17 proceeds to process of a step S340. In step S340, the control device 17 determines whether the amount QPM of fine particles contained in the atmosphere is less than the third reference value TH3, but the amount QPM is equal to or greater than a fourth reference value TH4, i.e., contains a slightly large amount of fine particles in the atmosphere. If the amount QPM of fine particles is less than the third reference value TH3 and equal to or greater than the fourth reference value TH4, the control device 17 proceeds to process of a step S350. On the other hand, if the amount QPM of fine particles is less than the third reference value TH3 and not equal to or greater than the fourth reference value TH4, that is, if it is less than the fourth reference value TH4, the control device 17 proceeds to process of a step S370. In the step S370, the control device 17 decides to activate and operate the carbon dioxide recovery system 10 normally because the amount QPM of fine particles contained in the atmosphere is not so large.

In the step S350, the control device 17 determines whether or not the wind speed is stronger than a fifth reference value TH5. Note that the fifth reference value TH5 may be the same as or different from the second reference value TH2. If the wind speed is weak and less than the fifth reference value TH5, the control device 17 proceeds to process of a step S360. In the step S360, the control device 17 determines to activate the carbon dioxide recovery system 10 under a restricted condition. The above condition is that controlling an introducing direction of the atmosphere into the collector device 12 to a direction opposite to the wind direction. As a result, it is possible to prevent the atmosphere containing a relatively large amount of fine particles from being introduced into the collector device 12. On the other hand, if the wind speed is equal to or higher than the fifth reference value TH5, the control device 17 proceeds to process of a step S330 and determines to stop the operation of the carbon dioxide recovery system 10.

In this manner, the control device 17 determines whether the carbon dioxide recovery system 10 should be stopped, be activated under a restriction, or be activated normally in the salt damage suppression process. Therefore, in situations where there is a high probability that yellow sand, or fine particulate matter may adhere to the electrochemical cell 12a, the control device 17 is configured to avoid executing a series of control sequences for carbon dioxide recovery. Furthermore, even if the carbon dioxide recovery system 10 is activated in a situation where the amount of fine particles in the atmosphere is rather large, it is still possible to prevent fine particles from entering into the collector device 12, as much as possible, by introducing the atmosphere into the recovery device 12 from the direction opposite to the wind direction. As a result, it is possible to suppress the deterioration of the carbon dioxide adsorption performance of the electrochemical cell 12a by suppressing the adhesion of substances to the electrochemical cell 12a. Note that if the amount of fine particles in the atmosphere is rather large, the activation of the carbon dioxide recovery system 10 may be stopped rather than activating the carbon dioxide recovery system 10 under a restriction.

The present disclosure is explained with a preferred embodiment as described above. However, the present disclosure is not limited to the above-mentioned embodiment, and may be variously modified within the spirit and scope of the present disclosure. For example, in the above-described embodiments, no reference is made to the number of housings that accommodate the electrochemical cells 12a. The number of housings may be one or more. If a plurality of housings are provided and each one contains one of the electrochemical cell 12a, the plurality of enclosures may be connected in parallel to the CO2 recovery tank 16. Then, the control device 17 may be configured to perform an individual recovery mode in which carbon dioxide is individually recovered from each of the electrochemical cells 12a of a plurality of housings, and a simultaneous recovery mode in which carbon dioxide is recovered from at least two or more of the electrochemical cells 12a in the housings simultaneously. The simultaneous recovery mode may be executed, for example, if a usage time of the carbon dioxide recovery system 10 reaches a predetermined time. Although the storage unit 18 is provided inside the control device 17 in the above-described embodiment, the storage unit 18 may be provided outside the control device 17. Alternatively, the storage unit 18 may be provided in the external server 21. Furthermore, at least part of the processing of the control device 17 may be executed by the external server 21.

Finally, this specification discloses a plurality of technical ideas listed below and a plurality of combinations thereof.

(Technical Idea 1) A carbon dioxide recovery system which recovers carbon dioxide from the atmosphere by an electrochemical reaction, the system comprising:
an electrochemical cell, disposed within a housing, which adsorbs carbon dioxide and desorbs adsorbed carbon dioxide in response to an applied electrical potential;
a collector unit which recovers carbon dioxide desorbed from the electrochemical cell; and
a control unit configured to control the electrochemical cell and the collector unit to perform:
   applying an adsorption potential to the electrochemical cell to adsorb carbon dioxide contained in the atmosphere introduced into the housing to the electrochemical cell;
   applying a desorption potential to the electrochemical cell to desorb carbon dioxide from the electrochemical cell; and
   acquiring information about substances contained in the atmosphere that may adhere to the electrochemical cell, wherein
   the control unit is configured to switch, at least, between execution and non-execution of carbon dioxide recovery control based on the information acquired by the acquiring step.

(Technical Idea 2) The carbon dioxide recovery system according to technical idea 1, wherein the control unit is configured to include blocking a path which introduces the atmosphere into the housing in the non-execution of carbon dioxide recovery control.

(Technical idea 3) The carbon dioxide recovery system according to technical idea 1 or 2, wherein substances that may adhere to the electrochemical cell include at least one of salt, yellow sand, and fine particulate matter.

(Technical Idea 4) The carbon dioxide recovery system according to technical idea 3, wherein the control unit is configured to perform acquiring information about location where the carbon dioxide recovery system is installed, wind direction and wind speed as the information about the substance that may adhere to the electrochemical cell, if the substance that may adhere to the electrochemical cell may be salt, and wherein the control unit is configured to perform non-execution of carbon dioxide recovery control if the location where the carbon dioxide recovery system is installed is a coastal area, the wind direction is from the sea to the land, and the wind speed is equal to or higher than a first reference value.

(Technical Idea 5) The carbon dioxide recovery system according to technical idea 4, further comprising; a blower unit which blows the atmosphere into the housing by forward rotation of a fan, wherein
the blower unit can reverse flow of the atmosphere into the housing by rotating the fan in an opposite direction, and wherein
the control unit is configured to perform a carbon dioxide recovery control and a control of the blower unit so that a direction of the atmosphere introduced into the housing is opposite to a wind direction from the sea to the land, if the wind speed is less than the first reference value and is greater than a second reference value.

(Technical Idea 6) The carbon dioxide recovery system according to any one of technical ideas 3-5, wherein the control unit is configured to perform acquiring information about an amount of yellow sand or fine particulate matter included in the atmosphere as information about substance that may adhere to the electrochemical cell in a case that the substance that may adhere to the electrochemical cell is yellow sand or fine particulate matter, and wherein
the control unit is configured to perform non-execution of carbon dioxide recovery control if the amount of yellow sand or fine particulate matter included in the atmosphere is equal to or greater than a third reference value.

(Technical Idea 7) The carbon dioxide recovery system according to technical idea 6, further comprising; a blower unit which blows the atmosphere into the housing by forward rotation of a fan, wherein
the blower unit can reverse flow of the atmosphere into the housing by rotating the fan in an opposite direction, and wherein
the control unit is configured to perform acquiring wind direction and wind speed as the information, and wherein
the control unit is configured to perform a carbon dioxide recovery control and a control of the blower unit so that a direction of the atmosphere introduced into the housing is opposite to an acquired wind direction, if the amount of yellow sand or fine particulate matter is less than a third reference value and is greater than a fourth reference value and a wind speed is less than a fifth reference value.

### [REFERENCE SIGNS LIST]

10: Carbon dioxide recovery system
11: Channel on-off valve
12: Collector device
12a: Electrochemical cell
13: Pump
14: Channel switching valve
15: CO2 sensor
16: CO2 recovery tank
17: Control device
18: Storage unit
19: Blower
20: Wind direction and speed sensor
21: External server

## Claims

1. A carbon dioxide recovery system which recovers carbon dioxide from the atmosphere by an electrochemical reaction, the system comprising:
an electrochemical cell (12a), disposed within a housing, which adsorbs carbon dioxide and desorbs adsorbed carbon dioxide in response to an applied electrical potential;
a collector unit (11, 12, 13, 14, 16) which recovers carbon dioxide desorbed from the electrochemical cell; and
a control unit (17) configured to control the electrochemical cell and the collector unit to perform:
applying an adsorption potential to the electrochemical cell to adsorb carbon dioxide contained in the atmosphere introduced into the housing to the electrochemical cell;
applying a desorption potential to the electrochemical cell to desorb carbon dioxide from the electrochemical cell; and
acquiring information about substances contained in the atmosphere that may adhere to the electrochemical cell, wherein
the control unit is configured to switch, at least, between execution and non-execution of carbon dioxide recovery control based on the information acquired by the acquiring step.

2. The carbon dioxide recovery system according to claim 1, wherein
the control unit is configured to include blocking a path which introduces the atmosphere into the housing in the non-execution of carbon dioxide recovery control.

3. The carbon dioxide recovery system according to claim 1 or 2, wherein substances that may adhere to the electrochemical cell include at least one of salt, yellow sand, and fine particulate matter.

4. The carbon dioxide recovery system according to claim 3, wherein
the control unit is configured to perform acquiring information about location where the carbon dioxide recovery system is installed, wind direction and wind speed as the information about the substance that may adhere to the electrochemical cell, if the substance that may adhere to the electrochemical cell may be salt, and wherein
the control unit is configured to perform non-execution of carbon dioxide recovery control if the location where the carbon dioxide recovery system is installed is a coastal area, the wind direction is from the sea to the land, and the wind speed is equal to or higher than a first reference value.

5. The carbon dioxide recovery system according to claim 4, further comprising:
a blower unit (19) which blows the atmosphere into the housing by forward rotation of a fan, wherein
the blower unit can reverse flow of the atmosphere into the housing by rotating the fan in an opposite direction, and wherein
the control unit is configured to perform a carbon dioxide recovery control and a control of the blower unit so that a direction of the atmosphere introduced into the housing is opposite to a wind direction from the sea to the land, if the wind speed is less than the first reference value and is greater than a second reference value.

6. The carbon dioxide recovery system according to any one of claims 3-5, wherein the control unit is configured to perform acquiring information about an amount of yellow sand or fine particulate matter included in the atmosphere as information about substance that may adhere to the electrochemical cell in a case that the substance that may adhere to the electrochemical cell is yellow sand or fine particulate matter, and wherein
the control unit is configured to perform non-execution of carbon dioxide recovery control if the amount of yellow sand or fine particulate matter included in the atmosphere is equal to or greater than a third reference value.

7. The carbon dioxide recovery system according to claim 6, further comprising:
a blower unit (19) which blows the atmosphere into the housing by forward rotation of a fan, wherein
the blower unit can reverse flow of the atmosphere into the housing by rotating the fan in an opposite direction, and wherein
the control unit is configured to perform acquiring wind direction and wind speed as the information, and wherein
the control unit is configured to perform a carbon dioxide recovery control and a control of the blower unit so that a direction of the atmosphere introduced into the housing is opposite to an acquired wind direction, if the amount of yellow sand or fine particulate matter is less than a third reference value and is greater than a fourth reference value and a wind speed is less than a fifth reference value.
